# EUROPEAN PATENT SPECIFICATION

(11) **EP 3 376 488 B1**
(45) Date of publication and mention of the grant of the patent: **05.05.2021**
(21) Application number: 18159941.6
(22) Date of filing: 05.03.2018
(51) Int. Cl.: G08G 3/02, G01C 23/00, G01C 21/20, G01S 7/00, G01S 13/86, G01S 13/937, G05D 1/02, G08G 3/00

(54) **SYSTEM FOR BUILDING SITUATION AWARENESS**
SYSTEM FÜR GEBÄUDESITUATIONSBEWUSSTSEIN
SYSTÈME DE SENSIBILISATION À LA SITUATION

(30) Priority: 13.03.2017 GB 201703968
(43) Date of publication of application: 19.09.2018
(73) Proprietor: Rolls-Royce plc, London N1 9FX (GB)
(72) Inventor: Rachmawati, Lily, Derby, Derbyshire DE24 8BJ (GB)
(74) Representative: Rolls-Royce plc

(56) References cited:
- US-A1- 2011 144 912
- US-A1- 2012 072 059
- US-A1- 2012 274 504
- US-A1- 2014 160 165
- US-A1- 2016 162 145
- US-A1- 2016 328 118

## Description

The present invention relates to the building of map data to assist the navigation of a vessel. For example, but without limitation, the vessel may be one of a fleet of unmanned vessels.

It is known for unmanned vessels to use on board sensing systems to build a local map of their environment in real time and to use this map for self-navigation. Map data collected may identify static obstacles such as land masses as well as dynamic obstacles such as other vessels moving within the mapped environment.

Current concepts and technologies combine multiple sensors of various types to compensate for limited range/accuracy of individual sensors in various settings. Whilst these can be effective in generating a comprehensive map of the nearby environment, influences within that environment such as extremes of weather can affect sensor range and accuracy impairing a vessel's self-navigation. Another significant influence is the presence of (larger and nearer) objects occluding the view of other objects (smaller and further away) from the vessel.

The sharing of data between multiple sub-systems is known. Such information sharing is not typically done on a selective basis.

The present invention seeks to overcome limitations of these prior known technologies.

US2012274504 relates to an information display device. The information display device includes an acquirer for acquiring positional information on one or more display targets including at least one of a landmark serving as a reference mark used when a movable body is in move, another movable body, and a location registered by an operator, and a controller for displaying positional information and circumferential information on the movable body in an information display area, associating at least one of the one or more display targets of which a position is outside the information display area with a direction to which the at least one of the one or more display targets is located centering on the movable body, and displaying the at least one of the one or more display targets in an outer circumferential area of the information display area.

US2016162145 relates to systems and methods to generate navigational imagery to help users pilot and/or otherwise operate mobile structures. A pilot display system includes one or more logic devices configured to communicate with various sensors, such as a ranging sensor and a speed, position, and/or orientation sensor mounted to a mobile structure, and one or more user interfaces, which may include one or more displays. At least one user interface is in proximity to a mobile structure and/or a user of a mobile structure and is configured to receive user input and provide user feedback with respect to a mobile structure. The logic devices are configured to render a reference icon on a display substantially statically relative to the display, to receive user selection of a target icon, and to render a target dialog substantially statically relative to the selected target icon.

In accordance with the present invention there is provided a system for generating a map for use in the navigation of one or more vessels according to claim 1, a method for generating a map on board a vessel according to claim 12, a method for providing data in a control hub according to claim 13, computers according to claims 16 and 17 and configured to perform the methods of claims 13 and 14, and computer readable medium according to claims 18 and 19 of the appended claims.

For example, but without limitation, the sensor sub-systems may comprise; a camera, an infrared imaging system, lidar, radar or any combination thereof.

The hub may be in data communication with one or more geographic information systems (for example ArcGIS), vessel traffic management systems (VTMS) or vessel automatic identification systems (AIS). Where a gap in the real-time map is identified, the one or more systems may be interrogated for information relating to the gap. Information useful in mapping the gap can be communicated to the vessel based processor and meshed with the real-time map of the local environment surrounding the vessel.

The hub may be in data communication with systems on one or more other vessels from which real-time map data can be accessed. The hub may be configured to request from the one or more other vessels, real-time map data related to the location of an identified gap. Relevant data may be communicated via the hub to the vessel for which the gap in the real-time map data has been identified.

The hub may be configured to aggregate obstacle data from the various remote sensing systems and the requesting vessel and generate therefrom, in a serialised digital format, a real-time map of the global environment in which a fleet of vessels exists. The hub may be further configured to identify inconsistencies in data collected for any given location within the global map and to identify that location as a gap. Further sensor data may then be collected in the given location allowing certainty and accuracy of the global map data to be improved.

The hub may be enabled to control one or more drones, each drone having a sensing system for sensing, in real-time, the presence of obstacles within a local environment of the drone. Responsive to the identification of gaps in the real-time map data, the hub may despatch one or more drones to the location of the identified gap to collect missing data. Once collected, the data can be communicated back to the vessel's on board processor.

For example, data may be communicated via an internet cloud-based infrastructure. Alternatively or in addition, low frequency microwave radio may be used for such communication. The latter is advantageous in not being significantly affected by weather conditions such as fog and heavy rain.

Where an unexpected dynamic obstacle is identified in the additional sensor data, the hub may be configured to determine a pattern of movement of the unexpected dynamic obstacle and predict a future pattern of movement of the unexpected dynamic obstacle. The pattern of movement may be determined from a collection of dynamic obstacle data collected at known time intervals and optionally from multiple remote sensing systems. Such data may be used to determine a direction of travel of the dynamic obstacle and speed of travel and can be extrapolated to predict a future pattern of movement. The predicted path of the unexpected dynamic obstacle may be communicated to vessels known to be in a vicinity of the predicted path. Optionally, the hub may be configured to assess a risk of interception of the predicted path of the unexpected dynamic obstacle with a planned route of one or more vessels and only in the event of a predicted interception, communicates an alert to the vessel. An alert communicated to the vessel may include an instruction for defensive action such as a change in speed of the vessel or a change in the planned route of the vessel.

Predicted paths of identified dynamic data may be represented in map data stored in the hub and communicated to individual vessels. In this manner, vessels may be made aware of dynamic obstacles in their vicinity which they have not independently detected.

The system may be embodied in a fleet of marine vessels. The vessels may be manned or unmanned or a combination of manned and unmanned.

Real-time map data from processors on each of a plurality of vessels all in data communication with the hub may be shared via the hub.

An embodiment of the invention will now be described by way of example with reference to the accompanying Figures in which;
Figure 1 shows a fleet of vessels in which a system in accordance with the invention is embodied;
Figure 2 illustrates the building of a map using the system represented in Figure 1;
Figure 3 illustrates process steps taken by a system in accordance with the invention in generating a map for use in the navigation of one or more vessels.

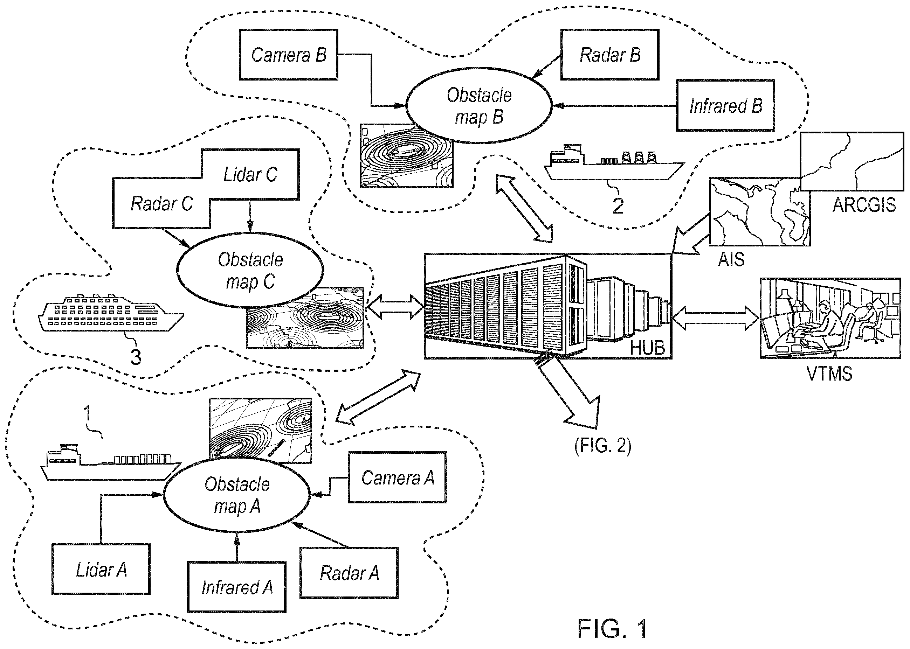

As can be seen in Figure 1, a fleet comprises vessels 1, 2 and 3. Each vessel is equipped with sensor sub-systems configured for sensing, in real-time, the presence of obstacles within a local environment of the vessel. Vessel 1 is equipped with sensor sub-systems Lidar A, Infrared A, Radar A and Camera A. A processor on board Vessel 1 collects data from these sub-systems and generates Obstacle Map A which is a real-time map representation of local environment within which Vessel 1 is located. Vessel 2 is equipped with sensor sub-systems Camera B, Radar B and Infrared B. A processor on board Vessel 2 collects data from these sub-systems and generates Obstacle Map B which is a real-time map representation of local environment within which Vessel 2 is located. Vessel 3 is equipped with sensor sub-systems Radar C, Lidar C. A processor on board Vessel 3 collects data from these sub-systems and generates Obstacle Map C which is a real-time map representation of local environment within which Vessel 3 is located. Each of Vessel 1, Vessel 2 and Vessel 3 is in data communication with the HUB which is able to build a combined map from map data received from individual vessel maps communicated to it. In addition, the HUB is in data communication with remote systems ARCGIS, AIS and VTMS which are each equipped to provide dynamic and/or static obstacle data by means of sensor systems on vessels in other fleets, from land-based sensor systems and/or from satellite based sensor systems.

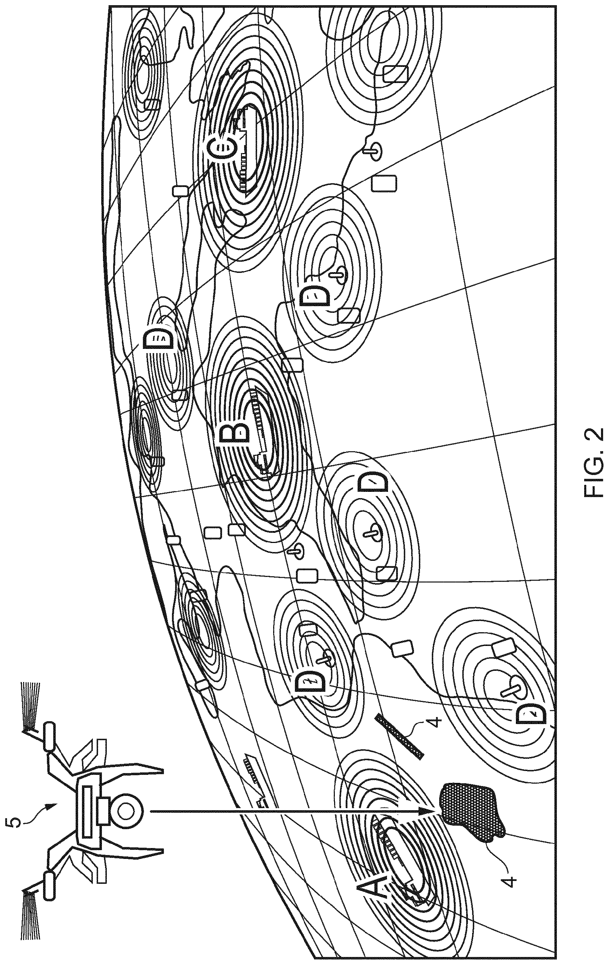

Figure 2 illustrates a planet surface with each of the Obstacle Maps A, B and C represented thereon. The regions marked D represent map data obtainable by the hub from the remote systems ARCGIS, AIS and VTMS. As can be seen Obstacle Map A of Vessel 1 is some distance from adjacent maps D resulting in a dark unmapped areas 4. Having access to data from all Obstacle Maps A, B and C and remote system maps D, the HUB is able to identify an absence of map data in the unmapped areas 4. The HUB is enabled to control the despatch of a drone 5 to the unmapped areas 4. The drone 5 which is in data communication with the HUB is provided with sensors for collecting obstacle data in its local environment. The HUB receives obstacle data from the previously unmapped areas 4 and is able to communicate this to Vessel 1. A processor on Vessel 1 is able then to mesh map data generated from the drone's obstacle data with the Obstacle Map A data, thereby widening the local environment mapped by Vessel 1 and facilitating easier navigation of Vessel 1 from its current location to a pre-defined destination.

It will be appreciated that whilst the shown embodiment demonstrates how missing map data can be obtained and provided to a vessel, a similar data collection system can be used to collect additional obstacle data in a region overlapping with the Obstacle Map A. Such additional data, when meshed with the Obstacle A data, can be used to verify and/or improve accuracy of the Obstacle Map A data. This can be particular beneficial when the sensitivity or range of one or more sensor sub-systems Camera A, Radar A, Infrared A, Lidar A is diminished due, for example, to inclement weather in the local environment. Sensitivity of remote systems positioned to collect data in the same local environment may not be so diminished due to their remote location and can provide better quality obstacle data in that instance.

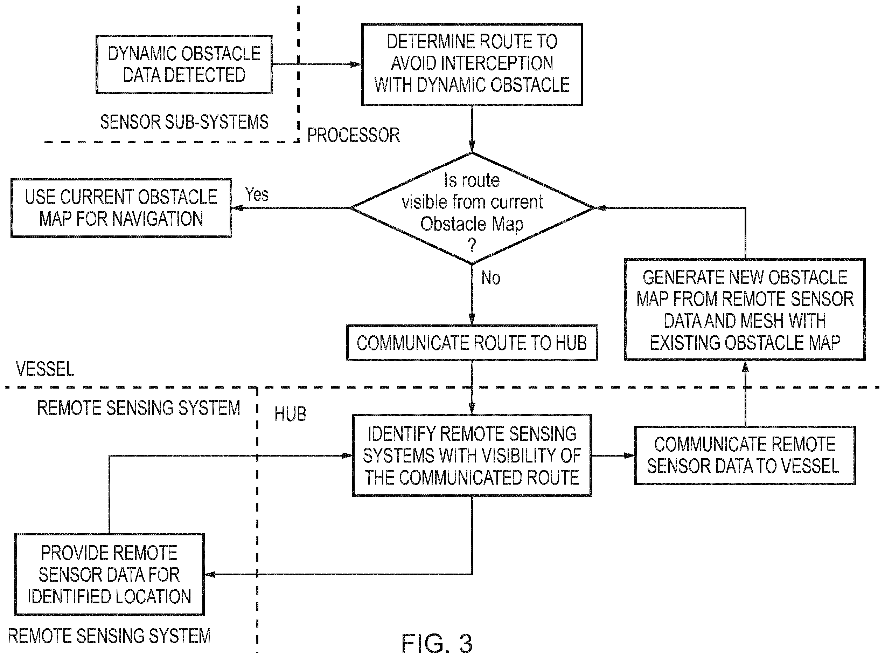

Embodiments of the system may be configured such that there is selectivity in the communication of map data between the hub and any vessel in the fleet. For example, the hub may be configured to be responsive to a request from an individual vessel to obtain and supply additional obstacle data from remote sensing systems. An example of a method performed by such an embodiment of the system is illustrated in Fig. 3.

As can be seen from Figure 3, a sensor sub-system located on a vessel detects the presence of a dynamic obstacle in a local environment of the vessel. This information is communicated to an on board processor. In a case where the detected dynamic obstacle presents a risk to the vessel (for example a risk of collision or unwanted detection), the processor determines a change to its current route to avoid the dynamic obstacle. In order to navigate the new route, the processor needs map data surrounding the new route. This map data might not be accessible by the vessel's sensor sub-systems. The processor identifies a gap in the required map data and communicates location details of the gap to a remotely located hub.

On receipt of the location details, the hub interrogates one or more remote sensing systems such as (without limitation) other vessels in a fleet, ARCGIS or VTMS to locate relevant obstacle data for the communicated location. Identified relevant obstacle data is then communicated back to the vessel processor via the hub. The vessel's processor then generates a real-time map for a location through which the new route is to pass.

It will be appreciated that by contrast to prior known shared data systems where a vessel may be communicated shared data from a number of sources whether or not it has a need for that data, the proposed system of the invention provides only data which is relevant to a vessel's current situation and the data is communicated on an as needed basis. This reduces data traffic between the hub and any vessel and allows necessary and relevant data to be communicated more quickly. Since effective navigation is reliant on real-time data, particularly in regard to the presence of dynamic obstacles, the vessel is enabled to respond more quickly to potential risk situations.

## Claims

1. A system for generating a map for use in the navigation of one or more vessels (1,2,3), the system comprising:
one or more sensor sub-systems provided on a vessel and configured for sensing, in real-time, the presence of obstacles within a local environment of the vessel (1,2,3);
a processor associated with the one or more sensor sub-systems for collecting the sensor data and configured for generating therefrom, in a serialised digital format, a real-time map of the local environment surrounding the vessel (1,2,3);
data communication means between the processor and a remotely located hub, the hub in data communication with one or more remote sensing systems located remotely from the vessel sensor sub-systems; wherein,
the hub is configured to collect additional sensor data from said one or more remote sensing systems and communicate the additional sensor data to the processor, and,
the processor is configured on receipt of additional sensor data to generate a real-time map from the sensor data and the additional sensor data; **characterised in that**:
the processor is configured to identify absence of obstacle data in a real-time map generated only from sensor data collected by the vessel's sensor subsystems and communicate data representative of the location of interest to the hub;
the hub is configured to be responsive to said location of interest to identify a remote sensing system positioned to collect additional sensor data in said location of interest and communicate the additional sensor data to the processor; and
the processor is configured on receipt of the additional sensor data to mesh a real-time map generated from the additional sensor data with a real-time map generated from the sensor data collected by the vessel's sensor sub-systems.

2. A system as claimed in claim 1 wherein the sensor sub-systems comprise; a camera, an infrared imaging system, lidar, radar or any sub-set or combination thereof.

3. A system as claimed in claim 1 or 2 wherein the hub is in data communication with one or more geographic information systems, vessel traffic management systems or vessel automatic identification systems or any sub-set or combination thereof.

4. A system as claimed in any preceding claim wherein the hub is in data communication with systems on one or more other vessels from which real-time map data can be accessed.

5. A system as claimed in any preceding claim wherein the hub is enabled to control one or more drones (5), each drone (5) having a sensing system for sensing, in real-time, the presence of obstacles within a local environment (4) of the drone.

6. A system as claimed in claim 5 wherein, responsive to the identification of gaps in a vessel's real-time map data, the hub is configured to despatch one or more drones to the location of the identified gap to collect missing data and communicate collected missing data from the drone (5) to the vessel (1,2,3).

7. A system as claimed in any preceding claim wherein the hub is configured, when the additional sensor data includes dynamic obstacle data, to determine an established pattern of movement of the dynamic obstacle and predict from the established pattern of movement a future pattern of movement thereof.

8. A system as claimed in claim 7 wherein the established pattern of movement is determined from a collection of dynamic obstacle data collected at known time intervals and/or from multiple remote sensing systems.

9. A system as claimed in claim 7 or claim 8 wherein the hub is further configured to communicate the predicted future pattern of movement of the dynamic obstacle to vessels known to be in a vicinity of the predicted pattern of movement.

10. A system as claimed in claim 9 wherein the hub is further configured to assess a risk of interception of the predicted pattern of movement of the dynamic obstacle with a known planned route of one or more vessels and only in the event of a predicted high risk of interception, communicates an alert to the vessel.

11. A system as claimed in claim 10 wherein the alert communicated to the vessel includes an instruction for defensive action.

12. A method for generating a map on board a vessel (1,2,3) of a system as claimed in any preceding claim comprising:
receiving sensor data from the one or more sensor sub-systems indicative of the presence of obstacles,
generating from the received sensor data, in a serialised digital format, a real-time map of a local environment representing a current spatial arrangement of the obstacles therein,
responsive to identification of an absence of obstacle data in a location of interest, communicating data representative of the location of interest to a remotely located hub,
receive obstacle data related to the location of interest,
generate a real-time map using the received obstacle data.

13. A method for providing missing data in a control hub of a system as claimed in any of claims 1 to 11 comprising:
receiving from a requesting source, data representative of a location of interest,
interrogating one or more data sources other than the requesting source to identify obstacle data for the location of interest,
communicating identified obstacle data of interest to the requesting source.

14. A method as claimed in claim 13 wherein the identified obstacle data includes dynamic obstacle data and comprising; predicting a future pattern of movement of the dynamic obstacle and communicating this to the requesting source.

15. A system as claimed in any of claims 1 to 11 wherein the one or more vessels (1,2,3) is an unmanned marine vessel located at sea and the hub is located on land.

16. A computer configured to perform the method of Claim 13.

17. A computer configured to perform the method of claim 14 or 15.

18. A computer readable medium containing a computer program which, when installed on a computer enables the computer to perform the method of claim 13.

19. A computer readable medium containing a computer program which, when installed on a computer enables the computer to perform the method of claim 14 or 15.

## Patentansprüche

1. System zum Erzeugen einer Karte zur Verwendung bei der Navigation von einem oder mehreren Schiffen (1,2,3), wobei das System Folgendes umfasst:
ein oder mehrere Sensorteilsysteme, die auf einem Schiff bereitgestellt und konfiguriert sind, um das Vorhandensein von Hindernissen innerhalb einer lokalen Umgebung des Schiffes (1,2,3) in Echtzeit zu erfassen;
einen Prozessor, der dem einen oder den mehreren Sensorteilsystemen zugeordnet ist, um die Sensordaten zu sammeln, und konfiguriert ist, um daraus in einem serialisierten digitalen Format eine Echtzeitkarte der lokalen Umgebung, die das Schiff (1,2,3) umgibt, zu erzeugen;
Datenkommunikationsmittel zwischen dem Prozessor und einer entfernt gelegenen Zentrale, wobei die Zentrale in Datenkommunikation mit einem oder mehreren Fernerfassungssystemen steht, die sich entfernt von den Schiffssensorteilsystemen befinden; wobei
die Zentrale konfiguriert ist, um zusätzliche Sensordaten von dem einen oder den mehreren Fernerfassungssystemen zu sammeln und die zusätzlichen Sensordaten an den Prozessor zu kommunizieren, und
der Prozessor konfiguriert ist, um beim Empfang von zusätzlichen Sensordaten eine Echtzeitkarte aus den Sensordaten und den zusätzlichen Sensordaten zu erzeugen; **dadurch gekennzeichnet, dass**:
der Prozessor konfiguriert ist, um Fehlen von Hindernisdaten auf einer Echtzeitkarte zu identifizieren, die nur aus Sensordaten erzeugt wird, die durch die Sensorteilsysteme des Schiffes gesammelt werden, und Daten, die den Ort von Interesse darstellen, an die Zentrale zu kommunizieren;
die Zentrale konfiguriert ist, um auf den Ort von Interesse zu reagieren, um ein Fernerfassungssystem zu identifizieren, das positioniert ist, um zusätzliche Sensordaten an dem Ort von Interesse zu sammeln und die zusätzlichen Sensordaten an den Prozessor zu kommunizieren; und
der Prozessor konfiguriert ist, um beim Empfang der zusätzlichen Sensordaten eine Echtzeitkarte, die aus den zusätzlichen Sensordaten erzeugt wird, mit einer Echtzeitkarte zu verknüpfen, die aus den Sensordaten erzeugt wird, die durch die Sensorteilsysteme des Schiffes gesammelt werden.

2. System nach Anspruch 1, wobei die Sensorteilsysteme eine Kamera, ein Infrarotbildgebungssystem, Lidar, Radar oder einen beliebigen Teilsatz oder eine beliebige Kombination davon umfassen.

3. System nach Anspruch 1 oder 2, wobei die Zentrale in Datenkommunikation mit einem oder mehreren geografischen Informationssystemen, Schiffsverkehrsmanagementsystemen oder automatischen Schiffsidentifizierungssystemen oder einem beliebigen Teilsatz oder einer beliebigen Kombination davon steht.

4. System nach einem vorhergehenden Anspruch, wobei die Zentrale in Datenkommunikation mit Systemen auf einem oder mehreren anderen Schiffen steht, von denen aus auf Echtzeitkartendaten zugegriffen werden kann.

5. System nach einem vorhergehenden Anspruch, wobei die Zentrale eine oder mehrere Drohnen (5) steuern kann, wobei jede Drohne (5) ein Erfassungssystem aufweist, um das Vorhandensein von Hindernissen innerhalb einer lokalen Umgebung (4) der Drohne in Echtzeit zu erfassen.

6. System nach Anspruch 5, wobei die Zentrale als Reaktion auf die Identifizierung von Lücken in den Echtzeitkartendaten eines Schiffes konfiguriert ist, um eine oder mehrere Drohnen an den Ort der identifizierten Lücke zu senden, um fehlende Daten zu sammeln und gesammelte fehlende Daten von der Drohne (5) an das Schiff (1,2,3) zu kommunizieren.

7. System nach einem vorhergehenden Anspruch, wobei die Zentrale konfiguriert ist, um, wenn die zusätzlichen Sensordaten dynamische Hindernisdaten beinhalten, ein festgelegtes Bewegungsmuster des dynamischen Hindernisses zu bestimmen und aus dem festgelegten Bewegungsmuster ein zukünftiges Bewegungsmuster davon vorherzusagen.

8. System nach Anspruch 7, wobei das festgelegte Bewegungsmuster aus einer Sammlung von dynamischen Hindernisdaten bestimmt wird, die in bekannten Zeitintervallen und/oder aus mehreren Fernerfassungssystemen gesammelt werden.

9. System nach Anspruch 7 oder Anspruch 8, wobei die Zentrale ferner konfiguriert ist, um das vorhergesagte zukünftige Bewegungsmuster des dynamischen Hindernisses an Schiffe zu kommunizieren, von denen bekannt ist, dass sie sich in einer Nähe des vorhergesagten Bewegungsmusters befinden.

10. System nach Anspruch 9, wobei die Zentrale ferner konfiguriert ist, um ein Risiko des Abfangens des vorhergesagten Bewegungsmusters des dynamischen Hindernisses mit einer bekannten geplanten Route von einem oder mehreren Schiffen zu beurteilen und nur im Falle eines vorhergesagten hohen Abfangrisikos eine Warnung an das Schiff zu kommunizieren.

11. System nach Anspruch 10, wobei die Warnung, die an das Schiff kommuniziert wird, eine Anweisung zur defensiven Handlung beinhaltet.

12. Verfahren zum Erzeugen einer Karte an Bord eines Schiffes (1,2,3) eines Systems nach einem vorhergehenden Anspruch, umfassend:
Empfangen von Sensordaten von dem einen oder den mehreren Sensorteilsystemen, die auf das Vorhandensein von Hindernissen hinweisen,
Erzeugen einer Echtzeitkarte einer lokalen Umgebung, die eine aktuelle räumliche Anordnung der Hindernisse darin darstellt, aus den empfangenen Sensordaten in einem serialisierten digitalen Format;
als Reaktion auf die Identifizierung eines Fehlens von Hindernisdaten an einem Ort von Interesse, Kommunizieren von Daten, die den Ort von Interesse darstellen, an eine entfernt gelegene Zentrale;
Empfangen von Hindernisdaten in Bezug auf den Ort von Interesse,
Erzeugen einer Echtzeitkarte unter Verwendung der empfangenen Hindernisdaten.

13. Verfahren zum Bereitstellen von fehlenden Daten in einer Steuerzentrale eines Systems nach einem der Ansprüche 1 bis 11, umfassend:
Empfangen von Daten, die einen Ort von Interesse darstellen, von einer anfordernden Quelle,
Abfragen von einer oder mehreren anderen Datenquellen als der anfordernden Quelle, um Hindernisdaten für den Ort von Interesse zu identifizieren,
Kommunizieren von identifizierten Hindernisdaten von Interesse an die anfordernde Quelle.

14. Verfahren nach Anspruch 13, wobei die identifizierten Hindernisdaten dynamische Hindernisdaten beinhalten und umfassend das Vorhersagen eines zukünftigen Bewegungsmusters des dynamischen Hindernisses und Kommunizieren davon an die anfordernde Quelle.

15. System nach einem der Ansprüche 1 bis 11, wobei das eine oder die mehreren Schiffe (1,2,3) ein unbemanntes Seeschiff sind, das sich auf See befindet, und sich die Zentrale an Land befindet.

16. Computer, der konfiguriert ist, um das Verfahren nach Anspruch 13 durchzuführen.

17. Computer, der konfiguriert ist, um das Verfahren nach Anspruch 14 oder 15 durchzuführen.

18. Computerlesbares Medium, das ein Computerprogramm enthält, das, wenn es auf einem Computer installiert ist, es dem Computer ermöglicht, das Verfahren nach Anspruch 13 durchzuführen.

19. Computerlesbares Medium, das ein Computerprogramm enthält, das, wenn es auf einem Computer installiert ist, es dem Computer ermöglicht, das Verfahren nach Anspruch 14 oder 15 durchzuführen.

## Revendications

1. Système permettant de générer une carte destinée à être utilisée dans la navigation d'un ou plusieurs navires (1, 2, 3), le système comprenant :
un ou plusieurs sous-systèmes de capteurs fournis sur un navire et configurés pour détecter, en temps réel, la présence d'obstacles dans un environnement local du navire (1, 2, 3) ;
un processeur associé au ou aux sous-systèmes de capteur destiné à collecter les données de capteur et configuré pour générer à partir de ceux-ci, dans un format numérique sérialisé, une carte en temps réel de l'environnement local entourant le navire (1, 2, 3) ;
un moyen de communication de données entre le processeur et un concentrateur situé à distance, le concentrateur étant en communication de données avec un ou plusieurs systèmes de détection à distance situés à distance des sous-systèmes de capteurs de navire ;
ledit concentrateur étant configuré pour collecter des données de capteur supplémentaires à partir dudit ou desdits systèmes de détection à distance
et communiquer les données de capteur supplémentaires au processeur, et,
ledit processeur étant configuré pour générer, lors de la réception de données de capteur supplémentaires, une carte en temps réel à partir des données de capteur et des données de capteur supplémentaires ; **caractérisé en ce que** :
le processeur est configuré pour identifier l'absence de données d'obstacle dans une carte en temps réel générée uniquement à partir de données de capteur collectées par les sous-systèmes de capteurs du navire et communiquer des données représentatives de l'emplacement d'intérêt au concentrateur ;
le concentrateur est configuré pour réagir audit emplacement d'intérêt pour identifier un système de détection à distance positionné pour collecter des données de capteur supplémentaires dans ledit emplacement d'intérêt et communiquer les données de capteur supplémentaires au processeur ; et
le processeur est configuré pour harmoniser, lors de la réception des données de capteur supplémentaires, une carte en temps réel générée à partir des données de capteur supplémentaires avec une carte en temps réel générée à partir des données de capteur collectées par les sous-systèmes de capteur du navire.

2. Système selon la revendication 1, lesdits sous-systèmes de capteur comprenant; une caméra, un système d'imagerie infrarouge, un lidar, un radar ou tout sous-ensemble ou combinaison de ceux-ci.

3. Système selon la revendication 1 ou 2, ledit concentrateur étant en communication de données avec un ou plusieurs systèmes d'informations géographiques, des systèmes de gestion de trafic de navires ou des systèmes d'identification automatique de navires ou tout sous-ensemble ou combinaison de ceux-ci.

4. Système selon l'une quelconque des revendications précédentes, ledit concentrateur étant en communication de données avec des systèmes sur un ou plusieurs autres navires à partir desquels des données cartographiques en temps réel peuvent être accédées.

5. Système selon l'une quelconque des revendications précédentes, ledit concentrateur étant activé pour commander un ou plusieurs drones (5), chaque drone (5) possédant un système de détection destiné à détecter, en temps réel, la présence d'obstacles dans un environnement local (4) du drone.

6. Système selon la revendication 5, en réponse à l'identification de lacunes dans les données cartographiques en temps réel d'un navire, ledit concentrateur étant configuré pour expédier un ou plusieurs drones à l'emplacement des lacunes identifiées pour collecter les données manquantes et communiquer les données manquantes collectées à partir du drone (5) au navire (1,2,3).

7. Système selon l'une quelconque des revendications précédentes, ledit concentrateur étant configuré, lorsque les données de capteur supplémentaires comprennent des données d'obstacle dynamiques, pour déterminer un modèle établi de déplacement de l'obstacle dynamique et prédire à partir du modèle établi de déplacement un modèle futur de déplacement de celui-ci.

8. Système selon la revendication 7, ledit modèle établi de déplacement étant déterminé à partir d'une collection de données d'obstacle dynamiques collectées à des intervalles de temps connus et/ou à partir de multiples systèmes de détection à distance.

9. Système selon la revendication 7 ou 8, ledit concentrateur étant en outre configuré pour communiquer le modèle futur prédit de déplacement de l'obstacle dynamique aux navires connus pour être à proximité du modèle prédit de déplacement.

10. Système selon la revendication 9, ledit concentrateur étant en outre configuré pour évaluer un risque d'interception du modèle prédit de déplacement de l'obstacle dynamique avec une route planifiée connue d'un ou plusieurs navires et uniquement dans le cas d'un risque élevé prédit d'interception, communiquant une alerte au navire.

11. Système selon la revendication 10, ladite alerte communiquée au navire comprenant une instruction pour une action défensive.

12. Procédé permettant la génération d'une carte à bord d'un navire (1,2,3) d'un système selon l'une quelconque des revendications précédentes, comprenant :
la réception des données de capteur en provenance du ou des sous-systèmes de capteur indiquant la présence d'obstacles,
la génération à partir des données de capteur reçues, dans un format numérique sériel, une carte en temps réel d'un environnement local représentant un agencement spatial actuel des obstacles dans celui-ci,
en réponse à l'identification d'une absence de données d'obstacle dans un emplacement d'intérêt, la communication des données représentatives de l'emplacement d'intérêt à un concentrateur situé à distance,
la réception de données d'obstacles liées à l'emplacement d'intérêt, la génération d'une carte en temps réel à l'aide des données d'obstacles reçues.

13. Procédé permettant de fournir des données manquantes dans un concentrateur de commande d'un système selon l'une quelconque des revendications 1 à 11, comprenant :
la réception en provenance d'une source demandeuse, des données représentatives d'un emplacement d'intérêt, l'interrogation d'une ou de plusieurs sources de données autres que la source demandeuse pour identifier des données d'obstacle pour l'emplacement d'intérêt,
la communication des données d'obstacles identifiées d'intérêt à la source demandeuse.

14. Procédé selon la revendication 13, lesdites données d'obstacles identifiées comprenant des données d'obstacles dynamiques et comprenant ; la prédiction d'un modèle futur de mouvement de l'obstacle dynamique et la communication de celui-ci à la source demandeuse.

15. Système selon l'une quelconque des revendications 1 à 11, ledit ou lesdits navires (1, 2, 3) étant un navire marin sans pilote situé en mer et ledit concentrateur étant situé sur terre.

16. Ordinateur configuré pour réaliser le procédé selon la revendication 13.

17. Ordinateur configuré pour réaliser le procédé selon la revendication 14 ou 15.

18. Support lisible par ordinateur contenant un programme informatique qui, lorsqu'il est installé sur un ordinateur, permet à l'ordinateur de réaliser le procédé selon la revendication 13.

19. Support lisible par ordinateur contenant un programme informatique qui, lorsqu'il est installé sur un ordinateur, permet à l'ordinateur de réaliser le procédé selon la revendication 14 ou 15.
